# EUROPÄISCHE PATENTSCHRIFT

(11) **EP 0 556 730 B1**
(45) Veröffentlichungstag und Bekanntmachung des Hinweises auf die Patenterteilung: **09.10.1996**
(21) Anmeldenummer: 93102188.5
(22) Anmeldetag: 12.02.1993
(51) Int. Cl.: B29C 47/88, B29D 7/01

(54) **An einen Blaskopf anschliessbare Vorrichtung zur Einführung von Blasluft in die Folienblase beim Blasen von Schlauchfolien**
To a blowing head fastenable device for injecting blowing air into the film bubble during blowing tubular films
Dispositif raccordable à une tête de soufflage pour introduire de l'air de soufflage dans la bulle de pellicule lors du soufflage de pellicules tubulaires

(30) Priorität: 21.02.1992 DE 9202272 U
(43) Veröffentlichungstag der Anmeldung: 25.08.1993
(73) Patentinhaber: Reifenhäuser GmbH & Co., Maschinenfabrik, 53844 Troisdorf (DE)
(72) Erfinder: Kahlen, Wilhelm, W-5210 Troisdorf-Eschmar (DE); Niegerl, Peter, W-5340 Bad Honnef - Rottbitze (DE)
(74) Vertreter: Andrejewski, Walter, Dr.

(56) Entgegenhaltungen:
- EP-A- 0 130 909
- DE-A- 2 814 283
- DE-A- 2 925 937
- DE-A- 3 903 174
- DE-C- 3 820 530

## Beschreibung

Die Erfindung betrifft eine an einen Blaskopf anschließbare Vorrichtung zur Einführung von Blasluft in die aus thermoplastischem Kunststoff bestehende Folienblase beim Blasen von Schlauchfolien aus einem thermoplastifizierten Kunststoffschlauch, - mit Innenrohr, rohrförmigem Außenmantel und Anschlußeinrichtung zum Anschluß an einen zugeordneten Blaskopf der Blasfolienanlage, wobei der Außenmantel das Innenrohr mit einem Ringspalt umgibt sowie der Ringspalt für die Blasluftzuführung, das Innenrohr für die Blasluftabführung eingerichtet sind, wobei der aus einem Düsenspalt des Blaskopfes austretende thermoplastifizierte Kunststoffschlauch mit dem Außenmantel einen diesen umgebenden ringförmigen Strömungskanal bildet, und wobei der Außenmantel fußseitig und kopfseitig Austrittsöffnungen für die Einführung von Blasluft in den Strömungskanal bzw. in die Folienblase aufweist, wobei ferner über die Länge des Aggregates aus Innenrohr und Außenmantel verteilt zur Fußseite hin zumindest eine Blasluftabsaugeinrichtung angeordnet ist, mit der Blasluft aus dem Strömungskanal absaugbar und in das Innenrohr einführbar ist und zur Kopfseite hin mit Abstand von der kopfseitigen Austrittsöffnung zumindest ein weiterer Blasluftaustritt zur Einführung von Blasluft in den Strömungskanal angeordnet sind. - Die Vorrichtung insgesamt wird in der Praxis auch als Stabilisator bezeichnet. Der thermoplastifizierte Kunststoffschlauch im Bereich zwischen Düsenspalt und Folienblase wird auch als langer Hals der Folienblase bezeichnet. Er befindet sich im ausreichend schmelzflüssigen Zustand, um zur Folienblase aufgeblasen zu werden. Der lange Hals der Folienblase und deren Übergangsbereich zur Schlauchfolie bedürfen der Stabilisierung. Die Blasluft ist gleichzeitig Kühlluft. Bezüglich einiger rheologischer und aerodynamischer Zusammenhänge wird auf die DE-C-38 20 530 verwiesen. Bei der aus dieser Patentschrift bekannten Vorrichtung sind lediglich die beschriebenen fußseitigen und kopfseitigen Austrittsöffnungen verwirklicht. Die Stabilisierung ist durch die Mengenströme der zugeführten Blasluft bzw. der abgesaugten Blasluft sowie die Einrichtung oder Einstellung der Teilmengenströme einstellbar.

Bekannt ist auch eine Vorrichtung der eingangs beschriebenen Gattung (DE-A-28 14 283), die allerdings eine verhältnismäßig geringe Höhe besitzt und bei der außerdem das Blasverhältnis, nämlich das Durchmesserverhältnis von Schlauchfolien und plastifiziertem Kunststoffschlauch relativ klein ist. Diese Vorrichtung eignet sich nicht zur Stabilisierung des sehr langen Folienhalses, der in die Folienblase übergeht.

Aufgabe der Erfindung ist es, eine gattungsgemäße Vorrichtung anzugeben, die in Verbindung mit Folienblasen, die einen sehr langen oder aus Werkstoffgründen sehr instabilen Hals aufweisen, eingesetzt werden kann.

Diese Aufgabe wird dadurch gelöst, daß gemäß Anspruch 1 die Blasluftabsaugeinrichtung sowie der zusätzliche Blasluftaustritt zum Zwecke der Stabilisierung des Kunststoffschlauches und/oder der Folienblase in bezug auf die passierenden Blasluftmengenströme verstellbar und dadurch aerodynamisch aufeinander abstellbar sind. - Die Erfindung beruht auf der Erkenntns, daß bei der eingangs beschriebenen Vorrichtung der Stabilisierungseffekt gleichsam kaskadenartig vervielfältigt werden kann, so daß die Vorrichtung auch in Verbindung mit Folienblasen eingesetzt werden kann, die einen sehr langen oder einen aus Werkstoffgründen sehr wenig stabilen Hals aufweisen. Die aerodynamische Abstimmung der Blasluftabsaugeinrichtung und des zusätzlichen Blasluftaustrittes können so erfolgen, daß störende Flattererscheinungen des Kunststfoffschlauches oder störendes Pumpen der Folienblase nicht mehr auftreten. Die dazu erforderliche betriebsmäßige Einstellung kann durch Versuche leicht ermittelt werden. Die Vorrichtung insgesamt kann in bekannter Weise längeneinstellbar ausgeführt werden, und zwar durch teleskopierende Ausführung von Innenrohrabschnitten bzw. Außenmantelabschnitten.

Im einzelnen bestehen mehrere Möglichkeiten der weiteren Ausbildung und Gestaltung. Eine bevorzugte Ausführungsform der Erfindung ist dadurch gekennzeichnet, daß die Blasluftabsaugeinrichtung aus Blasluftabsaugrohrstutzen besteht, die den Außenmantel und die Wandung des Innenrohres durchdringen und über deren Umfang äquidistant verteilt sind, und daß den Blasluftabsaugrohrstutzen außenmantelseitig Turbulenzsiebe vorgeschaltet sind, wodurch eine Strähnenbildung der Blasluft im Strömungskanal unterdrückt werden kann. Im Rahmen der Erfindung liegt es fernerhin, die Blasluftabsaugrohrstutzen in stromlinienförmig ausgebildete Haltestücke einzusetzen. Um zu erreichen, daß sich auch im Bereich des zusätzlichen Blasluftaustrittes sehr homogene Strömungsverhältnisse einstellen, lehrt die Erfindung, daß der zusätzliche Blasluftaustritt um den Umfang verteilte Bohrungen aufweist, die von dem Ringspalt zwischen Innenrohr und Außenmantel ausgehen und in einen Verteilerringraum einmünden, und daß der Verteilerringraum einen umlaufenden, in den Strömungskanal einmündenden Austrittsspalt aufweist.

Im folgenden wird die Erfindung anhand einer lediglich ein Ausführungsbeispiel darstellenden Zeichnung ausführlicher erläutert. Es zeigen
- Fig. 1: einen Längsschnitt durch eine erfindungsgemäße Vorrichtung in starker Schematisierung,
- Fig. 2: in gegenüber der Fig. 1 wesentlich vergrößertem Maßstab den Ausschnitt A aus dem Gegenstand der Fig. 1,
- Fig. 3: im Maßstab der Fig. 2 den Ausschnitt B aus dem Gegenstand der Fig. 1,
- Fig. 4: im Maßstab der Fig. 2 den Ausschnitt C aus dem Gegenstand der Fig. 1 und
- Fig. 5: im Maßstab der Fig. 2 den Ausschnitt D aus dem Gegenstand der Fig. 1.

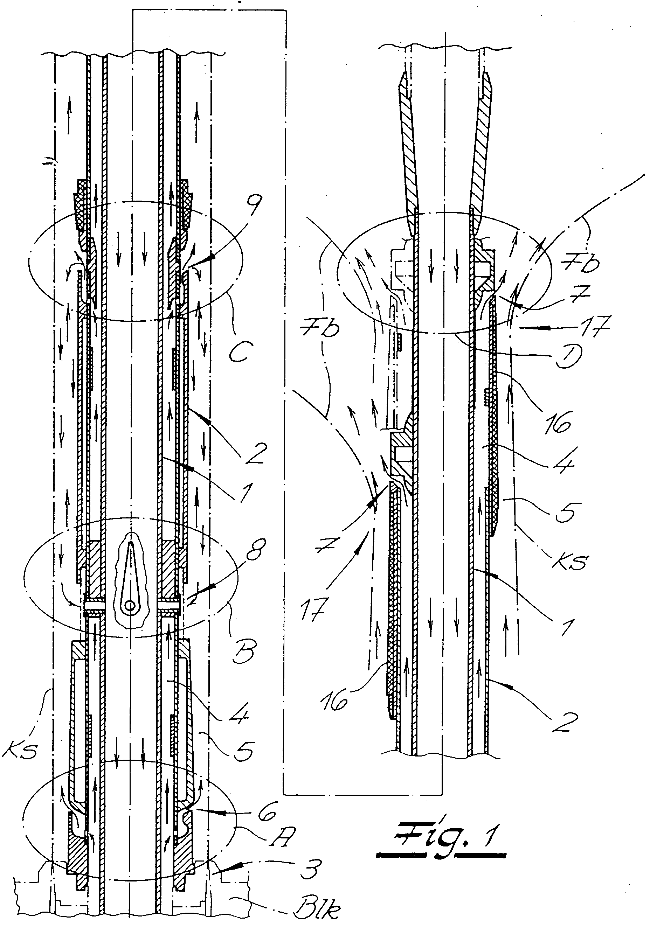

Die in den Figuren dargestellte Vorrichtung ist an einen Blaskopf einer Anlage zur Herstellung von Blasfolien angeschlossen. In der Fig. 1 wurde der Blaskopf unten strichpunktiert angedeutet und mit Blk bezeichnet.

Die Vorrichtung dient zur Einführung von Blasluft in die aus thermoplastischem Kunststoff bestehende Folienblase beim Blasen von Schlauchfolien aus einem thermoplastifizierten Kunststoffschlauch. Der Kunststoffschlauch Ks und die Folienblase Fb wurden in Fig. 1 ebenfalls angedeutet.

Zur Vorrichtung gehören ein Innenrohr 1, ein rohrfömriger Außenmantel 2 und eine Anschlußeinrichtung 3 zum Anschluß an den zugeordneten Blaskopf der Blasfolienanlage. Der Außenmantel 2 umgibt das Innenrohr 1 mit einem Ringspalt 4. Der Ringspalt 4 ist für die Blasluftzuführung, das Innenrohr 1 ist für die Blasluftabführung eingerichtet. Insoweit wird auf die eingezeichneten Pfeile verwiesen. Der aus einem Düsenspalt des Blaskopfes Blk austretende thermoplastifizierte Kunststoffschlauch Ks bildet mit dem Außenmantel 2 einen diesen umgebenden ringförmigen Strömungskanal 5. Der Außenmantel 2 besitzt fußseitig und kopfseitig im Ausführungsbeispiel schlitzförmige Austrittsöffnungen 6 bzw. 7 für die Einführung von Blasluft in den Strömungskanal 5 bzw. in die Folienblase Fb. Auch insoweit wird auf die in Fig. 1 eingezeichneten Pfeile verwiesen.

Man entnimmt aus der Fig. 1, daß über die Länge des Aggregates aus Innenrohr 1 und Außenmantel 2 verteilt zur Fußseite hin eine Blasluftabsaugeinrichtung 8 angeordnet ist, mit der Blasluft aus dem Strömungskanal 5 absaugbar und in das Innenrohr 1 einführbar ist. Man entnimmt aus der Fig. 1 fernerhin, daß zur Kopfseite hin mit Abstand von der kopfseitigen Austrittsöffnung 7 zumindest ein weiterer Blasluftaustritt 9 zur Einführung von Blasluft in den Strömungskanal 5 angeordnet ist. Die Blasluftabsaugeinrichtung 8 sowie der zusätzliche Blasluftaustritt 9 sind aerodynamisch aufeinander abgestimmt.

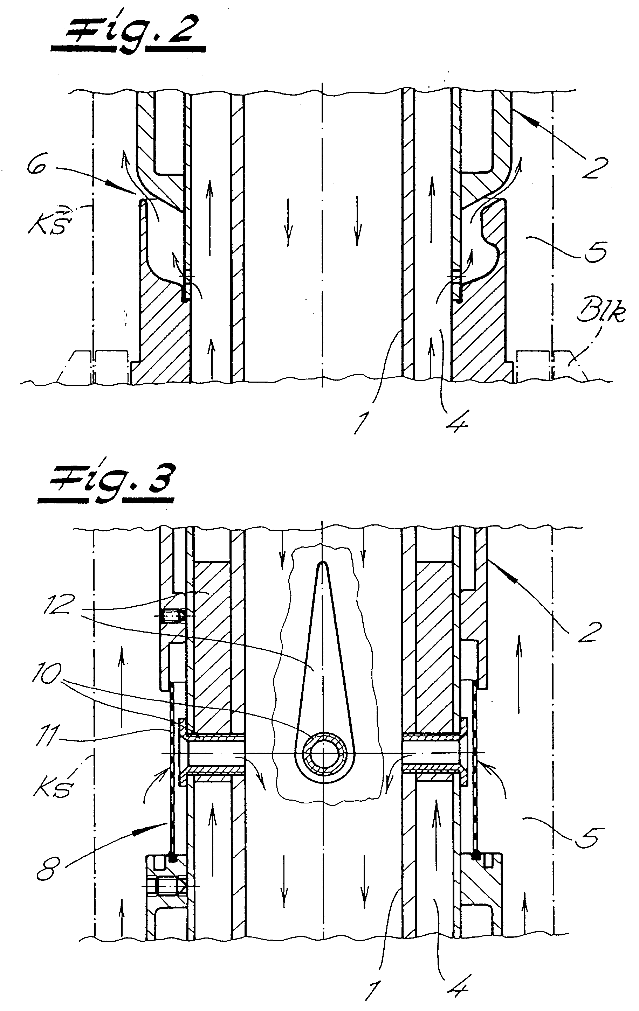

In der Fig. 2 erkennt man die fußseitigen Austrittsöffnungen 6 für die Einführung von Blasluft in den Strömungskanal 5, die auch bei der bekannten Ausführungsform verwirklicht sind. In der Fig. 5 erkennt man entsprechend die kopfseitige Austrittsöffnung 7 für die Einführung von Blasluft in den Strömungskanal 5 bzw. in die Folienblase Fb.

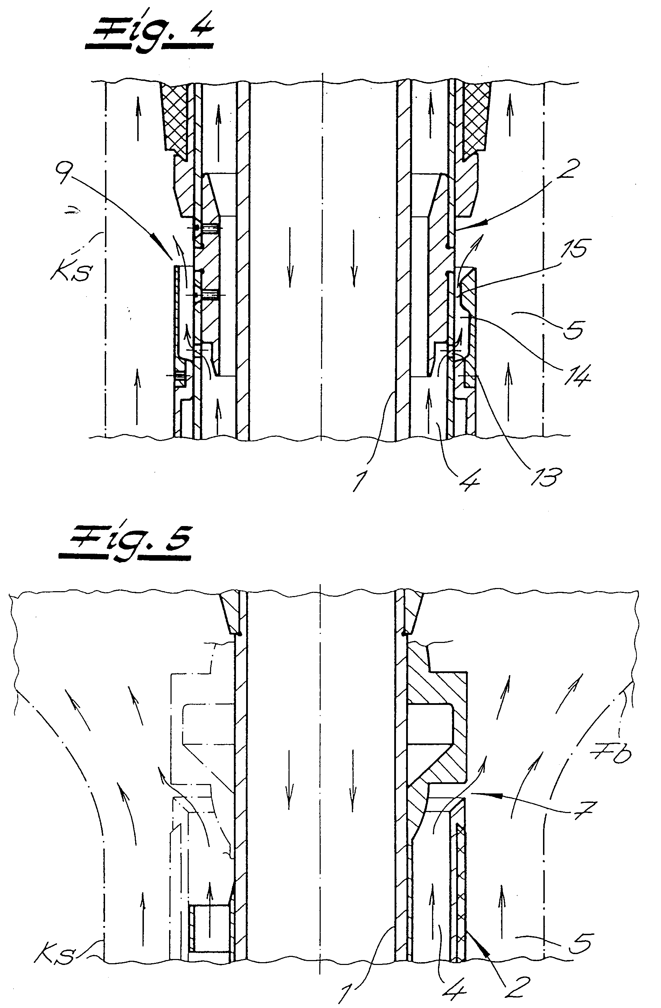

Die Einzelheiten einer Blasluftabsaugeinrichtung 8, mit der die erfindungsgemäße Vorrichtung ausgestattet sein kann, entnimmt man der Fig. 3. Man erkennt, daß die Blasluftabsaugeinrichtung 8 aus Blasluftabsaugrohrstutzen 10 besteht, die den Außenmantel 2 und die Wandung des Innenrohres 1 durchdringen. Sie sind über deren Umfang äquidistant verteilt. Den Blasluftabsaugrohrstutzen 10 sind außenmantelseitig Turbulenzsiebe 11 vorgeschaltet. Die Blasluftabsaugrohrstutzen 10 sind in stromlinienförmig ausgebildete Haltestücke 12 eingesetzt, die im übrigen von der Blasluft, die in dem Ringspalt 4 zwischen Innenrohr 1 und Außenmantel 2 strömt, umströmbar sind.

Eine mögliche Ausbildung des zusätzlichen Blasluftaustrittes 9 erkennt man in der Fig. 4. Der Blasluftaustritt 9 besitzt über den Umfang verteilte Bohrungen 13, die von dem Ringspalt 4 zwischen Innenrohr 1 und Außenmantel 2 ausgehen und in einen Verteilerringraum 14 einmünden. Der Verteilerringraum 14 weist einen umlaufenden, in den Strömungskanal 5 einmündenden Austrittsspalt 15 auf. Nicht gezeichnet wurde, daß die Blasluftabsaugeinrichtung 8 sowie der zusätzliche Blasluftaustritt 9 in bezug auf die passierenden Blasluftmengenströme verstellbar sein können.

Ein unteres Teilstück und ein oberes Teilstück der erfindungsgemäßen Vorrichtung sind in Fig. 1 aus Gründen des Platzbedarfes nebeneinander angeordnet. In der Fig. 1 rechts erkennt man fernerhin, daß die Vorrichtung auf unterschiedliche Länge eingerichtet werden kann.

Von besonderer Bedeutung ist die konische Hülse 16, die in Fig. 1, rechte Teilfigur, erkennbar ist. Die konische Gestaltung bewirkt in Verbindung mit der in Strömungsrichtung angeschlossenen Austrittsöffnung 7 eine Einschnürung des Halses der Folienblase Fb, wie es bei dem Pfeil 17 angedeutet worden ist. Der Konuswinkel beträgt etwa 1°. Wird der Spalt klein gehalten, so kann erreicht werden, daß zwischen den Bauteilen 9 und 8 die Strömungsrichtung sich umkehrt, was den Wärmeübergang in bezug auf die Innenkühlung verbessert. Insoweit wird auf die Fig. 1, linke Teilfigur, verwiesen.

## Patentansprüche

1. An einen Blaskopf anschließbare Vorrichtung zur Einführung von Blasluft in die aus thermoplastischem Kunststoff bestehende Folienblase (Fb) beim Blasen von Schlauchfolien aus einem thermoplastifizierten Kunststoffschlauch (Ks), - mit Innenrohr (1), rohrförmigem Außenmantel (2) und Anschlußeinrichtung (3) zum Anschluß an einen zugeordneten Blaskopf (Blk) der Blasfolienanlage, wobei der Außenmantel (2) das Innenrohr (1) mit einem Ringspalt (4) umgibt sowie der Ringspalt (4) für die Blasluftzuführung, das Innenrohr (1) für die Blasluftabführung eingerichtet sind, wobei der aus einem Düsenspalt des Blaskopfes (Blk) austretende thermoplastifizierte Kunststoffschlauch (Ks) mit dem Außenmantel (2) einen diesen umgebenden ringförmigen Strömungskanal (5) bildet, und wobei der Außenmantel (2) fußseitig und kopfseitig Austrittsöffnungen (6, 7) für die Einführung von Blasluft in den Strömungskanal (5) bzw. in die Folienblase (Fb) aufweist, wobei ferner über die Länge des Aggregates aus Innenrohr (1) und Außenmantel (2) verteilt zur Fußseite hin zumindest eine Blasluftabsaugeinrichtung (8) angeordnet ist, mit der Blasluft aus dem Strömungskanal (5) absaugbar und in das Innenrohr (1) einführbar ist und zur Kopfseite hin mit Abstand von der kopfseitigen Austrittsöffnung (7) zumindest ein weiterer Blasluftaustritt (9) zur Einführung von Blasluft in den Strömungskanal (5) angeordnet sind, **dadurch gekennzeichnet**, daß die Blasluftabsaugeinrichtung (8) sowie der zusätzliche Blasluftaustritt (9) zum Zwecke der Stabilisierung des Kunststoffschlauches (Ks) und/oder der Folienblase (Fb) in bezug auf die passierenden Blasluftmengenströme verstellbar und dadurch aerodynamisch aufeinander abstimmbar sind.

2. Vorrichtung nach Anspruch 1, dadurch gekennzeichnet, daß die Blasluftabsaugeinrichtung (8) aus Blasluftabsaugstutzen (10) besteht, die den Außenmantel (2) und die Wandung des Innenrohres (1) durchdringen und über deren Umfang äquidistant verteilt sind, und daß den Blasluftabsaugrohrstutzen (10) außenmantelseitig Turbulenzsiebe (11) vorgeschaltet sind.

3. Vorrichtung nach Anspruch 2, dadurch gekennzeichnet, daß die Blasluftabsaugrohrstutzen (10) in stromlinienförmig ausgebildete Haltestücke (12) eingesetzt sind.

4. Vorrichtung nach einem der Ansprüche 1 bis 3, dadurch gekennzeichnet, daß der zusätzliche Blasluftaustritt (9) um den Umfang verteilte Bohrungen (13) aufweist, die von dem Ringspalt zwischen Innenrohr (1) und Außenmantel (2) ausgehen und in einen Verteilerringraum (14) einmünden, und daß der Verteilerringraum (14) einen umlaufenden, in den Strömungskanal (5) einmündenden Austrittsspalt (15) aufweist.

5. Vorrichtung nach einem der Ansprüche 1 bis 4, dadurch gekennzeichnet, daß auf den Außenmantel (2) eine in Strömungsrichtung verjüngte konische Hülse (16) aufgesetzt ist, die vor der Austrittsöffnung (7) mündet und mit der die Einschnürung (17) des Halses der Folienblase (Fb) einstellbar ist.

## Claims

1. Device connecting to a blow head for blowing air into a film bubble (Fb) made of thermoplastic material for blow-forming tubular film from a thermoplastified plastic tube (Ks) - comprising an inner pipe (1), a tubular outer shell (2) and connecting means (3) for the connection to a respective blow head (Blk) of the tubular film unit, in which an annular gap (4) is formed between the outer shell (2) and the inner pipe (1) and in which the annular gap (4) is designed for supplying the blown air and the inner pipe (1) for returning the blown air, and in which the thermoplastified plastic tube (Ks) emerging from a nozzle aperture of the blow head (Blk) forms an annular flow channel (5) with and surrounding the outer shell (2), and in which the outer shell (2) contains outlet openings (6, 7) on either side, for feeding blown air into the flow channel (5) or into the film bubble (Fb), and in which along the length of the unit, consisting of the inner tube (1) and the outer shell (2), at least one device for exhausting blown air (8) is arranged near the base, for exhausting blown air from the flow channel (5) and feeding it into the inner pipe (1), and another blown air outlet (9) is arranged at the head end, at a certain distance from the head outlet opening (7) for supplying the flow channel (5) with blown air, **characterised** in that the device for exhausting blown air (8) and the additional blown air outlet (9) are adjustable for stabilising the plastic tube (Ks) and/or the film bubble (Fb) depending on the quantity of the blown air flow so that they can be aerodynamically tuned to one another.

2. Device according to claim 1, **characterised** in that the device for exhausting blown air (8) comprises blown air exhausting nozzles (10) penetrating the outer shell (2) and the wall of the inner pipe (1) at equal distances around their circumference and that the blown air exhausting nozzles (10) are connected to turbulence screens (11) on the outside of the shell.

3. Device according to claim 2, **characterised** in that the blown air exhausting nozzles (10) are arranged in streamline-shaped holding means (12).

4. Device according to one of the claims 1 to 3, **characterised** in that, spaced along its circumference, the additional blown air outlet (9) contains holes (13) leading from the annular space between the inner pipe (1) and the outer shell (2) into a distribution annulus (14) and that the distribution annulus (14) contains a circumferential outlet aperture (15) running into the flow channel.

5. Device according to one of the claims 1 to 4, **characterised** in that a tapered bevelled sleeve (16) arranged on the outer shell (2) runs into the outlet opening (7) in flow direction for adjusting the contraction (17) of the neck of the film bubble (Fb).

## Revendications

1. Dispositif raccordable à une tête de soufflage pour l'introduction d'air de soufflage dans la bulle en feuille (Fb) en matière synthétique thermoplastique lors du soufflage de feuilles en gaine à partir d'une gaine en matière synthétique thermoplastifiée (Ks), - avec tube intérieur (1), gaine extérieure tubulaire (2) et dispositif de raccordement (3) pour raccordement à une tête de soufflage (Blk) correspondante de l'installation de soufflage de feuilles, la gaine extérieure (2) entourant le tube intérieur (1) avec un passage annulaire (4) et le passage annulaire (4) étant conçu pour l'alimentation en air de soufflage, le tube intérieur (1) pour l'évacuation de l'air de soufflage, la gaine en matière synthétique thermoplastifiée (Ks) sortant d'une fente de buse de la tête de soufflage (Blk) et formant avec la gaine extérieure (2) un canal d'écoulement annulaire (5) entourant cette dernière et la gaine extérieure (2) présentant au côté pied et au côté tête des orifices de sortie (6, 7) pour l'introduction d'air de soufflage dans le canal d'écoulement (5) ou dans la bulle en feuille (Fb), de plus étant agencé, réparti sur la longueur du groupe composé du tube intérieur (1) et de la gaine extérieure (2) et vers le pied, au moins un dispositif d'aspiration de l'air de soufflage (8) avec lequel l'air de soufflage peut être aspiré hors du canal d'écoulement (5) et introduit dans le tube intérieur (1) et étant agencée vers la tête, avec un écart par rapport à l'orifice de sortie côté tête (7) au moins une autre sortie d'air de soufflage (9) pour l'introduction d'air de soufflage dans le canal d'écoulement (5), **caractérisé par** le fait que le dispositif d'aspiration d'air de soufflage (8) et la sortie supplémentaire d'air de soufflage (9) sont réglables en ce qui concerne les flux d'air de soufflage passants et donc adaptables entre eux en vue de la stabilisation de la gaine en matière synthétique (Ks) et/ou de la bulle en feuille (Fb).

2. Dispositif selon la spécification 1, **caractérisé par le fait** que le dispositif d'aspiration de l'air de soufflage (8) est composé de tubulures d'aspiration de l'air de soufflage (10) qui traversent la gaine extérieure (2) et la paroi du tube intérieur (1) sur la circonférence desquels elles sont réparties de façon équidistante et que les tubulures d'aspiration de l'air de soufflage (10) sont précédées du côté de la gaine extérieure de filtres à turbulences (11).

3. Dispositif selon la spécification 2, **caractérisé par le fait** que les tubulures d'aspiration de l'air de soufflage (10) sont insérées dans des fixations (12) de forme aérodynamique.

4. Dispositif selon une des spécifications 1 à 3, **caractérisé par le fait** que la sortie supplémentaire d'air de soufflage (9) présente des alésages (13) répartis sur sa circonférence, qui partent du passage annulaire entre le tube intérieur (1) et la gaine extérieure (2) et aboutissent dans un espace annulaire de distribution (14) et que l'espace annulaire de distribution (14) est entouré d'une fente de sortie (15) aboutissant dans le canal d'écoulement (5).

5. Dispositif selon une des spécifications 1 à 4, **caractérisé par le fait** que sur la gaine extérieure (2) est posée une douille conique (16) se rétrécissant dans le sens d'écoulement, qui aboutit devant l'orifice de sortie (7) et est réglable avec la contraction (17) du col de la bulle en feuille (Fb).
